(19) Europäisches Patentamt
European Patent Office
Office européen des brevets

(11) EP 4 058 278 B1

(12) EUROPEAN PATENT SPECIFICATION

(45) Date of publication and mention of the grant of the patent:
**31.12.2025 Bulletin 2026/01**

(21) Application number: **20811042.9**

(22) Date of filing: **11.11.2020**

(51) International Patent Classification (IPC):
***B29B 7/00*** *(2006.01)* ***B29B 7/28*** *(2006.01)*
***B29B 7/80*** *(2006.01)* ***B29B 7/90*** *(2006.01)*
***B29C 48/09*** *(2019.01)* ***B29C 48/92*** *(2019.01)*
*B29C 48/00 (2019.01)* *B29K 71/00 (2006.01)*

(52) Cooperative Patent Classification (CPC):
**B29B 7/005; B29B 7/286; B29B 7/90; B29C 48/09; B29C 48/92;** B29C 48/022; B29C 2948/92704; B29K 2071/00

(86) International application number:
**PCT/GB2020/052859**

(87) International publication number:
**WO 2021/094739 (20.05.2021 Gazette 2021/20)**

# (54) PROCESS FOR MANUFACTURING A PIPE

VERFAHREN ZUR HERSTELLUNG EINES ROHRES

PROCÉDÉ DE FABRICATION D'UN TUYAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2019 GB 201916411**

(43) Date of publication of application:
**21.09.2022 Bulletin 2022/38**

(73) Proprietor: **Victrex Manufacturing Limited**
**Thornton Cleveleys, Lancashire FY5 4QD (GB)**

(72) Inventor: **SMALL, Geoff**
**Cleveleys Lancashire FY5 4QD (GB)**

(74) Representative: **Gurun, Lara**
**Victrex Manufacturing Limited**
**Intellectual Property Department**
**Victrex Technology Centre**
**Hillhouse International**
**Thornton Cleveleys FY5 4QD (GB)**

(56) References cited:
**EP-A1- 2 328 951**
**EP-A1- 2 957 586**
**EP-A1- 3 174 937**
**WO-A1-2010/088639**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

There is disclosed a process for manufacturing a polymer pipe and a polymer pipe. More specifically, there is disclosed an improved process for manufacturing a polymer pipe to provide improved mechanical properties of the pipe.

Certain extruded polymeric pipes are used as liners for a reinforced pipe, much like that described in patent application WO2011117607A1. These liner pipes are sometimes called precursor pipes. Liner or precursor pipes may be combined with reinforcement layers to reinforce the liner or precursor pipe. Composite or reinforced pipes are often less prone to failure than single skin polymer pipes. However, applying reinforced layers onto polymer liner or precursor pipes can pose challenges, especially if there are surface defects in the outer surface of the liner pipe. Defects can cause points of failure in a reinforced pipe. Surface defects are more pronounced in liner pipes formed from polymeric materials with fillers because the fillers can cause nucleation points for surface defects. Fillers may also cause surface roughness on the surfaces of the extruded pipes.

WO 2010/088639 A1 discloses a flexible composite pipe useful in off-shore oil and gas well operations which contains at least one polymer layer such as an internal pressure sheath, an intermediate sheath, an anti-wear layer and/or an outer sheath, wherein the polymer layer is formed using a polyetherketoneketone or mixture of polyetherketoneketones having a controlled ratio of different isomeric repeating units.

EP2328951 A1 discloses a flexible pipe (fP) suitable for transporting hydrocarbons, said flexible pipe comprising at least one polymer layer (L) composed of a polymer composition (C) comprising at least one poly(aryl ether ketone) (P1), and at least one per(halo)fluoropolymer (P2). The poly(aryl ether ketone) (P1) and the per(halo)fluoropolymer (P2) are advantageously homogeneously distributed in the polymer composition (C). The polymer composition (C) is profitably prepared by a method comprising tumble blending the per(halo)fluoropolymer (P2) on one hand, and the poly(aryl ether ketone) (P1) or part of the poly(aryl ether ketone) (P1) on the other hand.

EP2957586 A1 discloses a process for producing a melt blend of a polybenzimidazole (PBI) and a polyetherketoneketone (PEKK) which comprises the steps of: pre-dry-mixing a PBI with a PEKK to obtain a dry mix; feeding said dry mix to an extruder with a plurality of heating zones; setting said heating zones in a temperature range of 240°C to 410°C; melting said dry mix blend as it passes through said extruder; and obtaining said melt blend of PBI/PEKK in all proportion within a range from 1/99 PBI/PEKK to 80/20 PBI/PEKK.

EP3174937 A1 discloses a blend comprising: (i) a polymeric material (A) having a repeat unit of formula -O-Ph-O-Ph-CO-Ph- (I) and a repeat unit of formula -O-Ph-Ph-O-Ph-CO-Ph- (II) wherein Ph represents a phenylene moiety; and (ii) a polymeric material (B) having a repeat unit of formula (XX) wherein t1 and w1 independently represent 0 or 1 and v1 represents0, 1 or 2.

It is an object of the present invention to address the above-described problems.

It is an object of the present invention to provide an improved process for manufacturing polymer pipes having improve mechanical properties and improved toughness.

The present invention is defined by a process for manufacturing a polymer pipe according to claim 1.

On another embodiment, the first and the second polymeric material may have a repeat unit of formula **(I):**

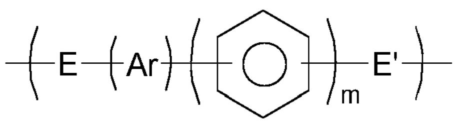

I

and/or a repeat unit of formula **(II):**

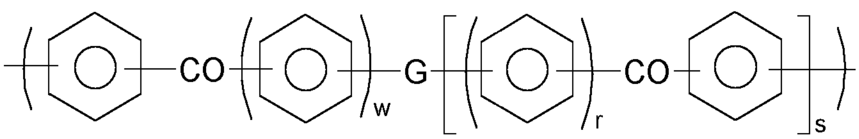

II

and/or a repeat unit of formula **(III):**

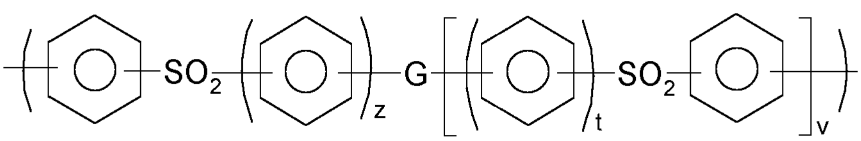

III

wherein:

**m, r, s, t, v, w and z** each independently represent zero or a positive integer;
**E** and **E'** each independently represent -O-, -S- or a direct bond;
**G** represents -O-, -S-, a direct bond or -O-phenylene-O-; and
**Ar** is -phenylene-C(O)-phenylene-, -phenylene-$C(CH_3)_2$-phenylene-, -phenylene-O-(1,4-phenylene)-O-phenylene-, -phenylene- or -phenylene-C(O)-phenylene-C(O)-phenylene-.

In a further embodiment, the first polymeric material may be selected from polyetheretherketone, polyetherketone, polyetherketoneetherketoneketone, polyetherketoneketone and polyetherdiphenyletherketone.
In some embodiments the phenylene groups mentioned in this specification are 1,4-linked to adjacent groups.
In one embodiment where **Ar** is -phenylene-C(O)-phenylene-C(O)-phenylene- the central phenylene may be 1,3- or 1,4-substituted to the adjacent carbonyl groups.
In one embodiment where **Ar** is -phenylene-C(O)-phenylene-C(O)-phenylene- the central phenylene is 1,4-substituted to the adjacent carbonyl groups.
In one embodiment, the polymeric material may comprise a repeat unit of formula **(I)** and no other repeat units. In one embodiment the polymeric material may be polyphenylenesulphide.
In one embodiment, the polymeric material may include more than one different type of repeat unit of formula **(I);** and more than one different type of repeat unit of formula **(II);** and more than one different type of repeat unit of formula **(III).**
In one embodiment the polymeric material only includes repeat units of formula **(I).**
In one embodiment the polymeric material only includes repeat units of formula **(II).**
In one embodiment the polymeric material only includes repeat units of formula **(III).**
In one embodiment the polymeric material has repeat units consisting essentially of repeat units of formula **(I), (II)** and/or **(III).**
In some embodiments the phenylene groups in units of formula **(I), (II)** and **(III)** are not additionally substituted. In some embodiments the phenylene groups in units of formula **(I), (II)** and **(III)** are not cross-linked.
Where **w** and/or **z** is/are greater than zero, each phenylene may independently be 1,4- or 1,3-linked to adjacent atoms in the repeat units of formula **(II)** and/or **(III).**
In some embodiments where **w** and/or **z** is/are greater than zero, each phenylene is 1,4-linked.
In one embodiment **G** represents -O-, a direct bond or a -O-phenylene-O- group.
In one embodiment **G** is a direct bond.
**"a", "b"** and **"c"** can be defined to represent the mole% of units of formula **(I), (II)** and **(III)** respectively within the polymeric material.
In one embodiment each unit of formula **(I)** in said polymeric material is the same.
In one embodiment each unit of formula **(II)** in said polymeric material is the same.
In one embodiment each unit of formula **(III)** in said polymeric material is the same.
In one embodiment **a** is 20 or less. In one embodiment **a** is 10 or less. In one embodiment **a** is 5 or less. In one embodiment **a** is in the range from 45 to 100. In one embodiment **a** is in the range from 45 to 55. In one embodiment **a** is in the range from 48 to 52. In one embodiment **b+c** is in the range from 0 to 55. In one embodiment **b+c** is in the range from 45 to 55. In one embodiment **b+c** is in the range from 48 to 52. In one embodiment **a/(b+c)** is in the range from 0.9 to 1.1. In one embodiment **a/(b+c)** is about 1. In one embodiment **a+b+c** is at least 90. In one embodiment **a+b+c** is at least 95. In one embodiment **a+b+c** is at least 99. In one embodiment **a+b+c** is about 100. In one embodiment **b** is at least 20. In one embodiment **b** is at least 40. In one embodiment **b** is at least 45.
In one embodiment the polymeric material comprises repeat units where at least 98% of said repeat units consist essentially of moieties **(I), (II)** and/or **(III).**
In one embodiment the polymeric material comprises a homopolymer having a repeat unit of general formula **(IV):**

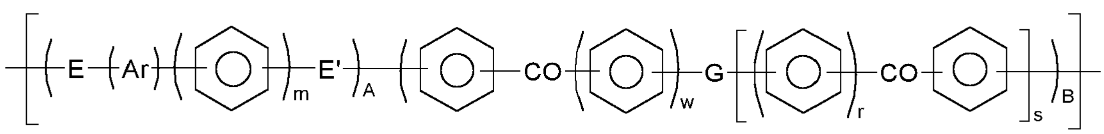

IV

or a homopolymer having a repeat unit of general formula (V):

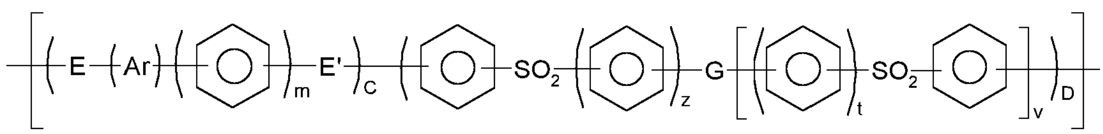

V

or a random or block copolymer formed from at least two different units of **(IV)** and/or **(V),** wherein:

**A** and **B** each represent 0 or 1, wherein at least one **of A** and **B** is 1;
**C** and **D** each represent 0 or 1, wherein at least one **of C** and **D** is 1; and
**E, E', G, Ar, m, r, s, t, v,** w and **z** are each as defined according to any statement herein.

In one embodiment **m** is an integer in the range from 0 to 3. In one embodiment **m** is 0, 1 or 2. In one embodiment **m** is 0 or 1. In one embodiment **r** is an integer in the range from 0 to 3. In one embodiment r is 0, 1 or 2. In one embodiment **r** is 0 or 1. In one embodiment **t** is an integer in the range from 0 to 3. In one **embodiment t** is 0, 1 or2. In one embodiment **t** is 0 or 1. In one embodiment s is 0 or 1. In one embodiment **v is** 0 or 1. In one embodiment **w is** 0 or 1. In one embodiment **z** is 0 or 1. In one embodiment the polymeric material is a homopolymer having a repeat unit of general formula **(IV).**

In one embodiment **Ar** is -(1,4-phenylene)-C(O)-(1,4-phenylene)-, -(1,4-phenylene)-O-(1,4-phenylene)-O-(1,4-phenylene)-, -(1,4-phenylene)-$C(CH_3)_2$-(1,4-phenylene)-, -(1,4-phenylene)-C(O)-phenylene-C(O)-(1,4-phenylene)- or -(1,4-phenylene)-.

In one embodiment the middle phenylene group of -(1,4-phenylene)-C(O)-phenylene-C(O)-(1,4-phenylene)- may be 1,3- or 1,4-linked. In one embodiment it is 1,4-linked.

In one embodiment **Ar** is -phenylene-C(O)-phenylene-, -phenylene-, -phenylene-O-(1,4-phenylene)-O-phenylene- or -phenylene-C(O)-phenylene-C(O)-phenylene-.

In one embodiment **Ar** is -phenylene-C(O)-phenylene-C(O)-phenylene-, -phenyleneor -phenylene-C(O)-phenylene-.

In one embodiment **Ar** is -(1,4-phenylene)-C(O)-phenylene-C(O)-(1,4-phenylene)-, -(1,4-phenylene)-C(O)-(1,4-phenylene)-, -(1,4-phenylene)-O-(1,4-phenylene)-O-(1,4-phenylene)-or -(1 ,4-phenylene)-.

In one embodiment **Ar** is -(1,4-phenylene)-C(O)-phenylene-C(O)-(1,4-phenylene)-, -(1,4-phenylene)-C(O)-(1,4-phenylene)- or -(1 ,4-phenylene)-.

In one embodiment the polymeric material includes at least 60mole% of repeat units which do not include -S- or -$SO_2$- moieties. In one embodiment the polymeric material includes at least 70mole% of repeat units which do not include -S- or -$SO_2$- moieties. In one embodiment the polymeric material includes at least 80mole% of repeat units which do not include -S- or -$SO_2$- moieties. In one embodiment the polymeric material includes at least 90mole% of repeat units which do not include -S- or -$SO_2$- moieties.

In one embodiment the polymeric material comprises at least 60mole% of repeat units which consist essentially of phenylene moieties, ether moieties and ketone moieties. In one embodiment the polymeric material comprises at least 70mole% of repeat units which consist essentially of phenylene moieties, ether moieties and ketone moieties. In one embodiment the polymeric material comprises at least 80mole% of repeat units which consist essentially of phenylene moieties, ether moieties and ketone moieties. In one embodiment the polymeric material comprises at least 90mole% of repeat units which consist essentially of phenylene moieties, ether moieties and ketone moieties.

In one embodiment the polymeric material(s) (potentially including co-polymers) comprises repeat units that consist essentially of phenylene moieties in conjunction with ketone and/or ether moieties.

In one embodiment the polymeric material does not include repeat units which include -S- or -$SO_2$- moieties nor aromatic groups other than phenylene.

In one embodiment the polymeric material has at least 98% of its repeat units consisting essentially of formula **(IV)** wherein **Ar** is -phenylene-, **E** and **E'** are each -O-, **m** = 0, **w =** 1, **G is** a direct bond, s = 0, and **A** and **B** are each 1. (i.e. polyetheretherketone).

In one embodiment the polymeric material has at least 98% of its repeat units consisting essentially of formula **(IV)** wherein **E** is -O-, **E'** is a direct bond, **Ar** is -phenylene-C(O)-phenylene-C(O)-phenylene-, **m =** 0, **A** = 1 and **B** = 0. (i.e. polyetherketone).

In one embodiment the polymeric material has at least 98% of its repeat units consisting essentially of formula **(IV)** wherein **E** is -O-, **Ar** is -phenylene-C(O)-phenylene-C(O)-phenylene-, **m =** 0, **E'** is a direct bond, **A** = 1 and **B** = 0. (i.e. polyetherketoneketone).

In one embodiment the polymeric material has at least 98% of its repeat units consisting essentially of formula **(IV)** wherein **Ar** is -phenylene-C(O)-phenylene-C(O)-phenylene-, **E** and **E'** are both -O-, **G** is a direct bond, **m** = 0, **w** = 1, **r** = 0, s = 1, and **A** and **B** are both 1. (i.e. polyetherketoneetherketoneketone).

In one embodiment the polymeric material has at least 98% of its repeat units consisting essentially of formula **(IV),** wherein **Ar** is -phenylene-, **E** and **E'** are both -O-, **G** is a direct bond, **m** = 0, **w** = 0 and **s, r, A** and **B** are all 1. (i.e. polyetheretherketoneketone).

In one embodiment the polymeric material has at least 98% of its repeat units consisting essentially of formula **(IV),** wherein **Ar** is -phenylene-, **E** and **E'** are both -O-, **m** = 1, **w** = 1, **A** = 1, **B** = 0, and **G** is a direct bond (i.e. polyetherdiphenyletherketone).

In one embodiment the main peak of the melting endotherm (Tm) for said polymeric material may be at least

300°C.

In one embodiment the polymeric material comprises a repeat unit of formula **(XX):**

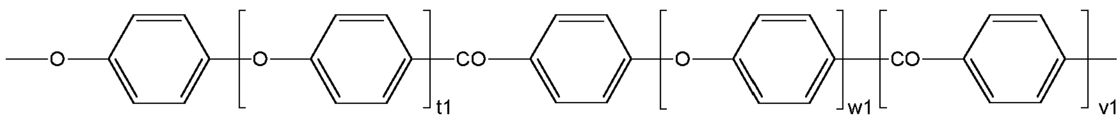

**(XX)**

wherein **t1** = 0 or 1, **w1** = 0 or 1 and **v1** represents 0, 1 or 2.

In one embodiment the polymeric material has at least 98% of its repeat units consisting essentially of formula **(XX).**

In one embodiment the polymeric material has at least 98% of its repeat units consisting essentially of formula **(XX)** wherein **t1** = 0 or 1, **w1 = 0 or** 1 and **v1** represents 0, 1 or 2.

In one embodiment the polymeric material comprises a repeat unit of formula **(XX)** wherein **t1=1, v1=0** and **w1=0.**

In one embodiment the polymeric material has at least 98% of its repeat units consisting essentially of formula **(XX)** wherein **t1=1, v1=0** and **w1=0.**

In one embodiment the polymeric material comprises a repeat unit of formula **(XX)** wherein **t1=0, v1=0** and **w1=0.**

In one embodiment the polymeric material has at least 98% of its repeat units consisting essentially of formula **(XX)** wherein **t1=0, v1=0** and **w1=0.**

In one embodiment the polymeric material comprises a repeat unit of formula **(XX)** wherein **t1=0, w1=1** and **v1=2.**

In one embodiment the polymeric material has at least 98% of its repeat units consisting essentially of formula **(XX)** wherein **t1=0, w1=1** and **v1=2.**

In one embodiment the polymeric material comprises a repeat unit of formula **(XX)** wherein **t1=0, v1=1** and **w1=0.**

In one embodiment the polymeric material has at least 98% of its repeat units consisting essentially of formula **(XX)** wherein **t1=0, v1=1** and **w1=0.**

In one embodiment the polymeric material comprises a repeat unit of formula **(XX)** wherein **t1=1, v1=0** and **w1=0.**

In one embodiment the polymeric material has at least 98% of its repeat units consisting essentially of formula **(XX)** wherein **t1=1, v1=0** and **w1=0.**

In one embodiment the polymeric material comprises a repeat unit of formula **(XX)** wherein **t1=0, v1=0** and **w1=0.**

In one embodiment the polymeric material has at least 98% of its repeat units consisting essentially of formula **(XX)** wherein **t1=0, v1=0** and **w1=0.**

In one embodiment the polymeric material comprises a repeat unit of formula **(XX)** wherein **t1=1, v1=0** and **w1=0.**

In one embodiment the polymeric material has at least 98% of its repeat units consisting essentially of formula **(XX)** wherein **t1=1, v1=0** and **w1=0.**

In one embodiment the polymeric material comprises polyetheretherketone polyetherketone, polyetherketoneetherketoneketone, polyetherketoneketone or polyetherdiphenyletherketone.

In one embodiment the polymeric material is selected from polyetheretherketone polyetherketone, polyetherketoneetherketoneketone, polyetherketoneketone and polyetherdiphenyletherketone.

In one embodiment the polymeric material comprises polyetherketone or polyetheretherketone.

In one embodiment the polymeric material is polyetherketone or polyetheretherketone.

In one embodiment the polymeric material comprises polyetheretherketone.

In one embodiment the polymeric material is polyetheretherketone.

In a second aspect, there is disclosed a pipe comprising a first polymeric material wherein the first polymeric material is selected from one or more polymeric materials each comprising (a) phenylene moieties; (b) ether moieties and optionally (c) ketone moieties and a second polymeric material comprising one or more polymeric materials each comprising (a) phenylene moieties; (b) ether moieties and (c) ketone moieties, and a filler means, for imparting colour to the second polymeric material; wherein the pipe has an elongation at break of at least 82 % measured according to International Standard ISO 527 (Type 1BA).

Optionally, the pipe has a length of at least 5m.

Optionally, the pipe has an outside diameter in the range from 0.5cm to 35cm.

Optionally, the pipe has a diameter to thickness in a range from 6 to 40.

In one embodiment the pipe comprises a composition which includes said polymeric material and one or more fillers.

In one embodiment the pipe may consist essentially of a composition which consists essentially of said polymeric material and one or more fillers.

In one embodiment the polymeric material makes up at least 60wt% of the total thermoplastic polymeric material in the composition from which the pipe is made. In another embodiment the above-mentioned figure is at least 70wt%. In

another embodiment the above-mentioned figure is at least 80wt%. In another embodiment the above-mentioned figure is at least 90wt%. In another embodiment the above-mentioned figure is at least 95wt%.

A single polymeric material (as described herein) is preferably substantially the only thermoplastic polymer in said composition. Suitably, a reference to a thermoplastic polymer refers to a polymer which is melted in the formation of said pipe.

A filler is suitably a material which is not melted during the manufacture of said pipe. Said filler suitably has a melting temperature greater than 350°C and preferably greater than 400°C.

Said filler may include a fibrous filler or a non-fibrous filler. Said filler may include both a fibrous filler and a non-fibrous filler. A said fibrous filler may be continuous or discontinuous. A said fibrous filler may be selected from inorganic fibrous materials, non-melting and high-melting organic fibrous materials, such as aramid fibres, and carbon fibre. A said fibrous filler may be selected from glass fibre, carbon fibre, asbestos fibre, silica fibre, alumina fibre, zirconia fibre, boron nitride fibre, silicon nitride fibre, boron fibre, fluorocarbon resin fibre and potassium titanate fibre. Preferred fibrous fillers are glass fibre and carbon fibre. A fibrous filler may comprise nanofibres.

However, such a filler (particularly a fibrous filler) could detrimentally increase the roughness on the inside of the pipe and therefore reduce fluid flow through the pipe in use.

A said non-fibrous filler may be selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, polybenzimidazole (PBI), carbon powder, nanotubes and barium sulfate. The non-fibrous fillers may be introduced in the form of powder or flaky particles.

Preferably, said filler comprises one or more fillers selected from glass fibre, carbon fibre, carbon black and a fluorocarbon resin. More preferably, said filler comprises glass fibre or carbon, especially discontinuous, for example chopped, glass fibre or carbon fibre.

In one embodiment the composition includes 35-100wt% of said polymeric material. In one embodiment the composition includes 50-100wt% of said polymeric material. In one embodiment the composition includes 65-100wt% of said polymeric material. In one embodiment the composition includes at least 90wt% of said polymeric material. In one embodiment the composition includes at least 95wt% of said polymeric material. In one embodiment the composition includes at least 98wt% of said polymeric material.

In one embodiment the composition does not include a reinforcing filler (e.g. carbon fibre) but may include a non-reinforcing filler (e.g. talc or carbon black). Such a non-reinforcing filler may be included to reduce costs and/or to colour the pipe.

In one embodiment the total amount of filler in the composition is 65wt% or less. In one embodiment the total amount of filler in the composition is 50wt% or less. In one embodiment the total amount of filler in the composition is 35wt% or less. In one embodiment the total amount of filler in the composition is 10wt% or less. In one embodiment the total amount of filler in the composition is 7.5wt% or less. In one embodiment the total amount of filler in the composition is 5wt% or less. In one embodiment the total amount of filler in the composition is 5wt% or less and includes carbon black.

In one embodiment the composition includes carbon black as a filler. In one embodiment the total amount of filler in the composition is 2.5wt% or less. In one embodiment the total amount of filler in the composition is 1wt% or less. In one embodiment the composition includes substantially no filler. In one embodiment the composition includes at least 95%wt of said polymeric material and at least 0.1wt% of a non-fibrous filler that is carbon black. In one embodiment the composition includes at least 98%wt of said polymeric material and at least 0.1wt% of a non-fibrous filler that is carbon black.

In one embodiment the pipe consists essentially of a polymeric material where at least 98% of its repeat units are of the formula (XX).

In one embodiment the pipe has a composition that consists essentially of a polymeric material where at least 98% of its repeat units are of the formula **(XX)** together with one or more fillers where the total amount of filler in the composition is 5wt% or less.

The incorporation of carbon black into the composition provides a pipe that works particularly well in any subsequent process where other materials are laser-welded onto the outside surface of the pipe. Accordingly, in one embodiment the pipe has a composition where between 0.05wt% and 10wt% of the composition is a filler that is carbon black. In one embodiment this range is 0.05wt% to 2.5wt%. In another embodiment this range is 0.05wt% to 1.5wt%. In one embodiment this range is 0.05wt% to 1wt%.

In one embodiment the pipe consists essentially of a polymeric material which is polyetheretherketone together with one or more fillers where the total amount of filler in the composition is 5wt% or less.

In one embodiment the pipe has a composition consisting essentially of a polymeric material which is polyetheretherketone together with carbon black where the carbon black is between 0.05wt% and 5wt% of the composition. In one embodiment this range is 0.05wt% to 2.5wt%. In another embodiment this range is 0.05wt% to 1.5wt%. In one embodiment this range is 0.05wt% to 1wt%.

In this specification, when referring to a pipe or length of a pipe, this refers to a pipe that is extruded/extrudable in a

single extrusion process, rather than the length being formed from two or more individual pipe sections that are joined together.

Accordingly, in any embodiment herein, the pipe comprises a single extrusion. In a further embodiment the pipe comprises a single extrusion, has substantially constant cross-section along its entire length and has a length of at least 100m. In one embodiment the pipe has a length of at least 5m. In one embodiment the pipe has a length of at least 10m. In one embodiment the pipe has a length of at least 50m. In one embodiment the pipe has a length of at least 100m. In one embodiment the pipe has a length of at least 500m. In one embodiment the pipe has a length of at least 1km. In one embodiment the pipe has a length of at least 1.5km. In one embodiment the pipe has a length of at least 2km. In one embodiment the pipe has a length of at least 2.5km. In one embodiment the pipe has a length of at least 3km. In one embodiment the pipe has a length of at least 3.5km.

In one embodiment the pipe has a substantially constant cross-section along its entire length. In one embodiment the pipe has an annular cross-section, for example a circular cross-section. In some embodiments the elongate opening of the calibrator device has an annual cross-section, for example a circular cross-section.

The pipe produced according to this invention may be used as one continuous length or may be cut into shorter lengths (for example 0.5m, 1m, 5m) for technology applications that require such shorter lengths.

In some embodiments the pipe has an outside diameter of at least 0.6cm. In some embodiments the pipe has an outside diameter of at least 2.5cm. In some embodiments the pipe has an outside diameter of at least 7cm. In some embodiments the pipe has an outside diameter of at least 10cm. In some embodiments the pipe has an outside diameter of at least 15cm. In some embodiments the pipe has an outside diameter of less than 50cm. In some embodiments the pipe has an outside diameter of less than 40cm. In some embodiments the pipe has an outside diameter of less than 30cm.

In some embodiments the pipe has an outside diameter in the range from 0.5cm to 35cm. In some embodiment the pipe has an outside diameter in the range from 0.6cm to 31cm.

The outside diameter of a pipe may be defined as "d" cm and the thickness of the pipe wall may be defined as "t" cm. Accordingly the diameter to thickness ratio (d/t) can be defined for a pipe. In some embodiments the diameter to thickness ratio of the pipe is at least 6. In some embodiments the diameter to thickness ratio of the pipe is in the range from 6 to 40. In some embodiments the diameter to thickness ratio of the pipe is in the range from 15 to 40.

In one aspect of the disclosure, the pipe (as described herein) is part of an assembly which comprises said pipe as an inner part and is surrounded by an outer part, said outer part being arranged around substantially all of the outer wall of the pipe and being arranged to reinforce the pipe. In a further embodiment of this assembly, the outer part of the assembly comprises a first material and a second material, the first material comprising a thermoplastic or thermosetting polymer and said second material comprising a fibrous material. In one embodiment the first material comprises a thermoplastic polymer. In one embodiment this thermoplastic polymer comprises a PAEK polymer. In one embodiment it comprises polyetheretherketone polymer. In some embodiments the second material comprises a fibrous material wherein the fibrous material is carbon fibre. In some embodiments of this aspect of the disclosure the outer part comprises greater than ten layers which are overlaying each other.

In a further aspect, there is disclosed a pipe manufactured according to process of the first aspect.

Any feature of any aspect of any invention or embodiment described herein may be combined with any feature of any other invention described herein mutatis mutandis.

Specific embodiments of the invention will now be described, by way of example, with reference to the accompanying figures, in which:

Figure 1 shows a graph displaying tensile modulus for each of samples A to G;
Figure 2 shows a graph displaying tensile yield strength for each of samples A to G;
Figure 3 shows a graph displaying elongation at break for each of samples A to G;
Figure 4 shows a graph displaying crystallinity for each of samples A, and C to F;
Figure 5 shows a graph displaying Izod impact strength for each of samples A to G;
Figure 6 shows a graph displaying critical stress intensity factor for each of samples A to G;
Figure 7 shows a graph displaying critical strain energy release rate for each of samples A to F;
Figure 8 shows a test method and pipe section.

The following tests are used in the examples which follow.

Test 1 - Melt Viscosity of polyaryletherketones

Melt Viscosity of polyaryletherketones was measured using a ram extruder fitted with a tungsten carbide die, 0.5mm (capillary diameter) x 3.175mm (capillary length). Approximately 5 grams of the polyaryletherketone was dried in an air circulating oven for 3 hours at 150°C. The extruder was allowed to equilibrate to 400°C. The dried polymer was loaded into the heated barrel of the extruder, a brass tip (12mm long x 9.92$\pm$0.01 mm diameter) placed on top of the

polymer followed by the piston and the screw was manually turned until the proof ring of the pressure gauge just engages the piston to help remove any trapped air. The column of polymer was allowed to heat and melt over a period of at least 5 minutes. After the preheat stage the screw was set in motion so that the melted polymer was extruded through the die to form a thin fibre at a shear rate of $1000s^{-1}$, while recording the pressure (P) required to extrude the polymer. The Melt Viscosity is given by the formula

$$\text{Melt Viscosity} = \frac{P\pi r^4}{8LSA} \text{ kNsm}^{-2}$$

where

P = Pressure / kN $m^{-2}$
L = Length of die / m
S = ram speed / m $s^{-1}$
A = barrel cross-sectional area / $m^2$
r = Die radius / m

The relationship between shear rate and the other parameters is given by the equation:

$$\text{Apparent wall shear rate} = 1000s^{-1} = \frac{4Q}{\pi r^3}$$

where Q = volumetric flow rate / $m^3$ $s^{-1}$ = SA.

Example 1 - Preparation of 4,4'-difluorobenzophenone (BDF) by reacting fluorobenzene and 4-fluorobenzoylchloride

A 10 litre 3-necked round-bottomed flask fitted with a mechanical stirrer, a thermometer, a dropping funnel containing 4-fluorobenzoyl chloride (1550g, 9.78 moles) and a reflux condenser was charged with fluorobenzene (2048g, 21.33 moles) and anhydrous aluminium trichloride (1460g,10.94 moles). The mixture was maintained at 20 to 30°C with stirring and the 4-fluorobenzoylchloride was added dropwise over a period of 1 hour. When the addition was complete the temperature of the reaction mixture was increased to 80°C over a period of 2 hours, allowed to cool to ambient temperature then carefully discharged into ice(4kg)/water(2kg). The mixture was recharged to a 20l 1-necked round-bottomed flask fitted with distil head. The contents were heated to distil off the excess fluorobenzene until a still-head temperature of 100°C was reached. The mixture was cooled to 20°C and the crude 4,4'-difluorobenzophenone was filtered off, washed with water and dried at 70°C under vacuum.

The crude product was recrystallised as follows: Dry crude product (100g) was dissolved with stirring in hot industrial methylated spirits ($400cm^3$) and charcoal, filtered, water ($100cm^3$) was added, reheated to reflux to dissolve the product and then cooled. The product was filtered off, washed with 1:1 industrial methylated spirits/water then dried at 70°C under vacuum. The product had a melting point range of 107-108°C and a 4,4'-difluorobenzophenone purity of greater than 99.90%. Details on the purity are provided below for three replicates of Example 1 (referred to as Examples 1a, 1b and 1c).

| **Example** | **2,4'BDF** (%w/w) | **MFB** (%w/w) | **4F,4'Cl** (%w/w) | **4,4'DCBP** (%w/w) | **4,4' FNBP** (%w/w) | **4,4'BDF** (%w/w by difference) |
|---|---|---|---|---|---|---|
| Example 1a | 0.005 | 0.027 | N/D | N/D | N/A | **99.97** |
| Example 1b | 0.004 | 0.026 | <0.001 | <0.001 | N/A | **99.97** |
| Example 1c | 0.003 | 0.019 | 0.002 | N/D | N/A | **99.98** |

Example 2 - Preparation of polyetheretherketone

A 3L vessel fitted with a ground glass Quickfit lid, stirrer/stirrer guide, nitrogen inlet and outlet was charged with 4,4'-difluorobenzophenone from Example 1 (269.76g, 1.236 mole), hydroquinone (133.2g, 1.2 mole) and diphenylsulphone (600g) and purged with nitrogen for over 1 hour. The contents were then heated to between 140 and 150°C to form an almost colourless solution. Dried sodium carbonate (127.32g, 1.2 mole) and potassium carbonate (3.336g, 0.0242

mole) were added. The temperature was raised to 200°C and held for 1 hour; raised to 250°C and held for 1 hour; raised to 315°C and maintained for 2 hours or until the required melt viscosity was reached, as determined by the torque rise of the stirrer. The required torque rise was determined from a calibration graph of torque rise versus MV. The reaction mixture was then poured into a foil tray, allowed to cool, milled and washed with 2 litres of acetone and then with warm water at a temperature of 40 - 50°C until the conductivity of the waste water was <2µS. The resulting polymer powder was dried in an air oven for 12 hours at 120°C. The MV of the resulting polymer was 0.65 $kNsm^{-2}$ measured according to Test 1.

Example 3 - Preparation of polyetheretherketone masterbatch

Polyetheretherketone as described in Example 2 was melted above the melting temperature of the polymer and mixed with 10wt% black pigment (Black Printex F alpha FDA grade, Supplier: Evonik Degussa).

Example 4 - General procedure for preparing compound granules

Formulations were prepared by compounding on a Rondol 10mm Twin Screw Extruder operating with a die temperature of 360°C, barrel temperature of 340°C - 360°C and with a screw speed of 84 rpm. The polymer powders were mixed and then added to the extruder via a hopper using a 'powder' screw feed; polymer granules were obtained at a throughput of 196g per hour.

Example 5 - General procedure for direct mixing of PEEK and PEEK masterbatch

Portions of PEEK as described in Example 2 and PEEK masterbatch as described in Example 3 were dry mixed and directly fed into the pipe extrusion apparatus.
Results are provided in Table 1 below showing the formulations of the compositions according to the invention and a number of comparative examples.

Table 1 - Compositions

| Sample | PEEK | PEEK masterbatch | Method (details) | Sample Preparation Method |
|---|---|---|---|---|
| A | 100wt% | | Polymer granules | Moulded |
| B | 95wt% | 5wt% | Compound granules | Moulded |
| C | 95wt% | 5wt% | Direct | Moulded |
| D | 95wt% | 5wt% | Direct | Pressed from 7.62 cm (3") pipe |
| E | 95wt% | 5wt% | Direct | Pressed from 5.08 cm (2") pipe |
| F | 100wt% | | Polymer granules | Pressed from 5.08 cm (2") pipe |
| G | 95wt% | 5wt% | Compound granules | Pressed from 15.24 cm (6") pipe |
| H | 95wt% | 5wt% | Direct | Pressed from 15.24 (6") pipe |

Details on the tests undertaken are described below.

Mechanical Tests

Tensile tests were carried out according to ISO and ASTM Standards ISO 527 (Type 1BA) and ASTM D638 (Type IV).
Notched Izod impact strength tests were carried out according to International Standard ISO 180/A.
Critical Stress Intensity Factor ($K_{1c}$) fracture toughness was carried out according to International Standard ISO 17281 and ISO 13586. The fracture toughness was determined by measuring of the stress intensity factor $K_{1c}$ which is identified as the point at which a thin crack in a material begins to grow.
Critical strain energy release rate ($G_{1c}$) was determined using International Standard ISO 17281 and ISO 13586.
Critical stress intensity factor and strain energy release rate were measured on pipe samples using a modified experimental technique as the extruded pipes are too thin walled to manufacture the 'standard' specimens from.
Pipe samples are cut into 20mm wide rings and notched to depths of 0.3mm, 0.6mm and 1.0mm. A typical sample is shown in Figure 8. Test arrangement is shown in the left-hand image of Figure 8. Test specimens are loaded in a three-point bend system comprised of supports with a 30mm span. The pipe sections were tested in flexure at a test speed of 20mm/min.

The toughness of the notched specimen was calculated from the formula for an edge-notched plate in flexure, equations (1) and (2) below.

$$K_I = K_0 f(a/D) \qquad (1)$$

Where $K_0$ is the stress intensity factor for an infinite plate, ie.

$$K_0 = \sigma_f \sqrt{(\pi a)} \qquad (2)$$

where "$\sigma_f$" is the gross stress at failure and "a" being the crack length (notch depth) and f(a/D) from reference (Stress Intensity Factors, D.P. Rooke and D.J. Cartwright , Hillingdon Press (1976), ISBN 0 11 771336, page 86)

$$f(a/D) = 1.12 - 1.39(a/D) + 7.32(a/D)2 - 13.1(a/D)^3 + 14.0(a/D)^4 \qquad (3)$$

where D is the specimen depth (pipe wall thickness).

Crystallinity may be assessed by several methods for example by density, by IR spectroscopy, by x-ray diffraction or by differential scanning calorimetry (DSC). The DSC method has been used to evaluate the crystallinity of the polymeric materials.

A dried sample of each polymer was compression moulded into an amorphous film, by heating 7g of polymer in a mould at 400°C under a pressure of 50bar for 2 minutes, then quenching in cold water producing a film of dimensions 120 x120mm, with a thickness in the region of 0.20mm. An 8mg plus or minus 3mg sample of each film was scanned as follows:

| | |
|---|---|
| Step 1 | Perform a preliminary thermal cycle by heating the sample from 30oC to 400oC at 20oC /min. |
| Step 2 | Hold for 2 mins. |
| Step 3 | Cool at 20 degrees C/min to 30 degrees C and hold for 5mins. |
| Step 4 | Heat from 30 degrees C to 400 degrees C at 20 degrees C/mins. |

From the resulting scan the Tc was the temperature at which the main peak of the crystallisation from the melt reached a maximum.

Results are provided in the Figures.

Test pieces of all types from samples A to C were injection moulded and from samples D to F were cut or pressed (using a purpose-built die) from extruded pipe samples. In all Izod specimens, the notch was cut using a purpose-built notching apparatus, (Ray-Ran Motorised Notch Cutter).

The results of the tensile tests on the various samples A to F are shown in Figures 1 to 3. The error bars on the charts represent ± 1 standard deviation.

The tensile modulus of the sample A and sample B (both in injection moulded form) appear to be very similar as expected because the addition of a small level of carbon black pigment does not change the stiffness to a significant degree (Figure 1). However, the dry mix of PEEK and PEEK master batch provides a pipe with a lower modulus (the average is -5%), as shown in examples C, D, and E. Process conditions have an impact on mechanical performance, as can be seen from Figure 2, where moulded samples have a higher yield strength than extruded samples.

Surprisingly, sample E has a higher mean elongation at break (Figure 3) equivalent to that of unpigmented polymer. Additionally, the samples D to F have slightly lower strength and significantly lower modulus (Figures 1 and 2) which would be considered advantageous for pipe mechanical properties.

Without being bound by theory, the differences in tensile performance of the pipe samples (samples D to F) may relate to the overall level of crystallinity of the resultant pipe as the process conditions are different in extrusion processes versus moulding process. The overall measured crystallinity does not indicate differences between the samples (Figure 4). However, it is thought that the size and distribution of crystalline regions impacts the mechanical performance of the pipe and that the process of mixing PEEK and PEEK masterbatch below the melting temperature of the PEEK provides improvements in elongation at break of the pipe.

Figure 5 shows the Izod impact strength of extruded and moulded samples. Samples C to F, and H have a higher impact strength compared with samples B and G.

Figures 6 and 7 show the critical stress intensity factor and the strain energy release rate for moulded bars and extruded pipe. Fracture mechanics provide a more reproducible way of measuring the toughness of a material. Using tension testing, a crack will grow, when the energy release rate equals the crack resistance force. The energy release rate G is defined as the rate at which energy is lost as a material undergoes fracture, with units of 'energy-per-unit-area'. The crack tip energy release rate quantifies the rate of change of the potential energy of a cracked elastic solid as the crack

grows. Regardless of the actual mechanisms involved, crack propagation requires dissipation (or conversion) of energy. Energy is required to create two new free faces. In addition, there may be more complex processes at the crack tip, where the material is plastically deformed; all these processes involve dissipation of energy. Simple fracture mechanics assumes that energy will be dissipated at a constant rate during crack growth. The crack can only grow if the rate of change of potential energy is sufficient to provide this energy. For a crack to grow therefore the available energy must be greater than the 'Critical Strain Energy Release Rate' defined as $G_{1c}$. The value of $G_{1c}$ is therefore a measure of how tough a material is: this is called the Energy Approach.

Another fracture mechanics approach is that of "Stress Intensity" and a stress intensity factor, K. This factor represents the effective local stress at the crack tip. The stress intensity factor is calculated for a given geometry and load and compared with a threshold value of K above which cracks will propagate in the given material. This threshold value of K is called the fracture toughness or critical stress intensity factor, $K_{IC}$, and is a characteristic of the material measured by testing in just the same way as yield strength or modulus. The stress intensity factor is in effect a measure of how large a flaw can be tolerated within a material before that flaw grows and the crack propagates. Knowing the applied stress and the critical stress intensity factor enables a simple calculation of whether or not a crack will grow. Stress intensity factor and strain energy release rate are frequently both referred to as 'fracture toughness'.

Using single edge notched beam samples a notch of radius 0.1mm is milled into the samples and then a 1mm deep 'sharp' notch is introduced using a known load and a sharp blade. The additional preparation and definition of the sample dimensions over a conventional Charpy or Izod provides additional accuracy and reduced scatter.

Figure 6 and 7 show that samples E and F have a higher tolerance of cracks than the other samples indicating that samples E and F have high toughness.

## Claims

1. A process for manufacturing a polymer pipe, the process comprising the following steps:

   selecting a first polymeric material wherein the first polymeric material is selected from one or more polymeric materials each comprising (a) phenylene moieties; (b) ether moieties and (c) ketone moieties;
   selecting a second polymeric material comprising one or more polymeric materials each comprising (a) phenylene moieties; (b) ether moieties and (c) ketone moieties, and a filler means, for imparting colour to the second polymeric material;
   mixing the first and second polymeric materials to form a polymeric composition;
   feeding the polymeric composition into an extruder to melt process the polymeric composition in a barrel of the extruder and extruding the polymeric composition through a die to form a polymer pipe; **characterised in that** the mixing of the first and second polymeric materials is at a temperature at least 50 degrees C below the melt temperature of the first polymeric material and/or at least 50 degrees C below the melt temperature of the second polymeric material.

2. A process according to claim 1, wherein the first and the second polymeric material have a repeat unit of formula (I):

   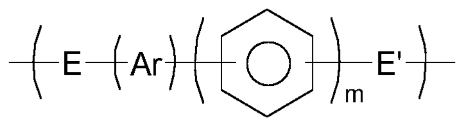

   I

   and/or a repeat unit of formula **(II):**

   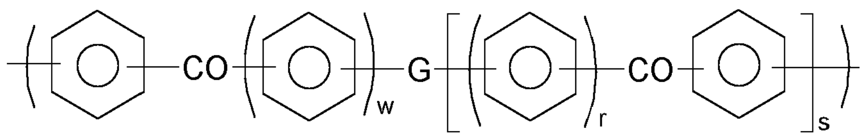

   II

   and/or a repeat unit of formula **(III):**

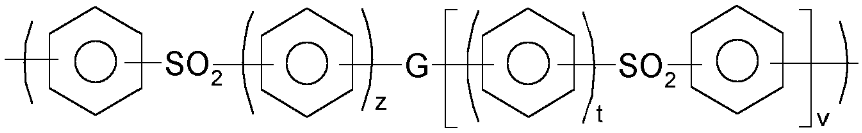

III

wherein:

**m, r, s, t, v, w** and **z** each independently represent zero or a positive integer;
**E** and **E'** each independently represent -O-, -S- or a direct bond;
**G** represents -O-, -S-, a direct bond or -O-phenylene-O-; and
**Ar** is -phenylene-C(O)-phenylene-, -phenylene-$C(CH_3)_2$-phenylene-, -phenylene-O-(1,4-phenylene)-O-phenylene-, -phenylene- or -phenylene-C(O)-phenylene-C(O)-phenylene-.

**3.** A process according to claim 1 or 2, wherein the first polymeric material is selected from polyetheretherketone, polyetherketone, polyetherketoneetherketoneketone, polyetherketoneketone and polyetherdiphenyletherketone.

**Patentansprüche**

**1.** Vorgang zum Herstellen eines Polymerrohrs, der Vorgang umfassend die folgenden Schritte:

Auswählen eines ersten Polymermaterials, wobei das erste Polymermaterial aus einem oder mehreren Polymermaterialien ausgewählt ist, jeweils umfassend (a) Phenyleneinheiten; (b) Ethereinheiten und (c) Ketoneinheiten;
Auswählen eines zweiten Polymermaterials, umfassend ein oder mehrere Polymermaterialien, jeweils umfassend (a) Phenyleneinheiten; (b) Ethereinheiten und (c) Ketoneinheiten und ein Füllmittel, um dem zweiten Polymermaterial Farbe zu verleihen;
Mischen des ersten und des zweiten Polymermaterials, um eine Polymerzusammensetzung auszubilden;
Zuführen der Polymerzusammensetzung in einen Extruder, um die Polymerzusammensetzung in einem Zylinder des Extruders schmelzzuverarbeiten, und Extrudieren der Polymerzusammensetzung durch eine Form, um ein Polymerrohr auszubilden; **dadurch gekennzeichnet, dass** das Mischen des ersten und des zweiten Polymermaterials bei einer Temperatur erfolgt, die mindestens 50 Grad C unter der Schmelztemperatur des ersten Polymermaterials und/oder mindestens 50 Grad C unter der Schmelztemperatur des zweiten Polymermaterials liegt.

**2.** Vorgang nach Anspruch 1, wobei das erste und das zweite Polymermaterial eine Wiederholungseinheit der Formel **(I)** aufweisen:

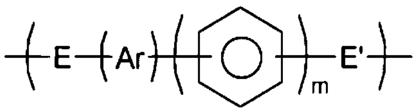

I

und/oder eine Wiederholungseinheit der Formel **(II):**

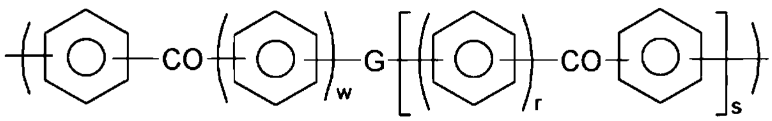

II

und/oder eine Wiederholungseinheit der Formel **(III):**

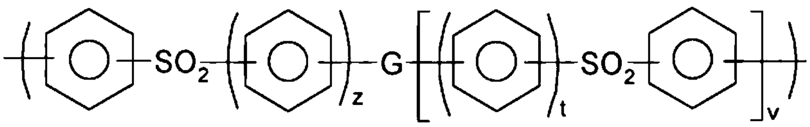

III

wobei:

**m, r, s, t, v, w und z** jeweils unabhängig Null oder eine positive ganze Zahl darstellen;
**E** und **E'** jeweils unabhängig -O-, -S- oder eine direkte Bindung darstellen;
**G** -O-, -S-, eine direkte Bindung oder -O-Phenylen-O- darstellt; und
**Ar** -Phenylen-C(O)-phenylen-, -Phenylen-$C(CH_3)_2$-phenylen-, -Phenylen-O-(1,4-phenylen)-O-phenylen-, -Phenylen- oder -Phenylen-C(O)-phenylen-C(O)-phenylen- ist.

**3.** Vorgang nach Anspruch 1 oder 2, wobei das erste Polymermaterial aus Polyetheretherketon, Polyetherketon, Polyetherketonetherketonketon, Polyetherketonketon und Polyetherdiphenyletherketon ausgewählt ist.

## Revendications

**1.** Procédé de fabrication d'un tuyau en polymère, le procédé comprenant les étapes suivantes :

la sélection d'un premier matériau polymère, dans lequel le premier matériau polymère est choisi parmi un ou plusieurs matériaux polymères comprenant chacun (a) des fractions de phénylène ; (b) les groupements éther et (c) les groupements cétone ;
la sélection d'un second matériau polymère comprenant un ou plusieurs matériaux polymères comprenant chacun (a) des fractions de phénylène ; (b) des fractions éther et (c) des fractions cétone, et un moyen de remplissage, pour conférer une couleur au second matériau polymère ;
le mélange du premier et second matériaux polymères pour former une composition polymère ;
l'introduction de la composition polymère dans une extrudeuse pour la faire fondre dans un cylindre de l'extrudeuse et extruder la composition polymère à travers une filière pour former un tuyau en polymère ;
**caractérisé en ce que** le mélange du premier et du second matériaux polymères se fait à une température inférieure d'au moins 50 degrés C à la température de fusion du premier matériau polymère et/ou à une température inférieure d'au moins 50 degrés C à la température de fusion du second matériau polymère.

**2.** Procédé selon la revendication 1, dans lequel le premier et le second matériaux polymères ont une unité de répétition de la formule **(I)** :

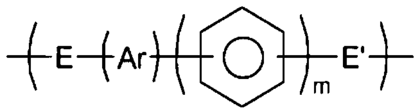

I

et/ou une unité de répétition de formule **(II) :**

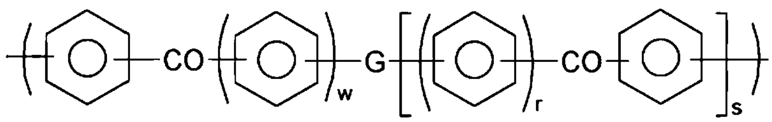

II

et/ou une unité de répétition de formule **(III)** :

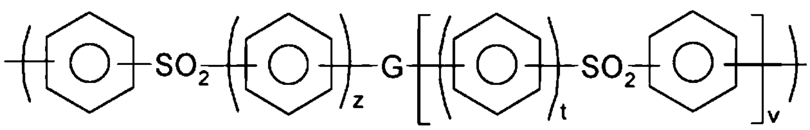

III

dans lequel :

**m, r,** s, **t, v,** w et **z** représentent chacun indépendamment zéro ou un nombre entier positif ;
**E** et **E'** représentent chacun indépendamment -O-, -S- ou une liaison directe ;
**G** représente -O-, -S-, une liaison directe ou -O-phénylène-O- ; et
**Ar** est -phénylène-C(O)-phénylène-, -phénylène-$C(CH_3)_2$-phénylène-, - phénylène-O-(1,4-phénylène)-O-phénylène-, -phénylène- ou -phénylène-C(O)-phénylène-C(O)-phénylène-.

**3.** Procédé selon la revendication 1 ou 2, dans lequel le premier matériau polymère est choisi parmi la polyétheréthercétone, la polyéthercétone, la polyéthercétone-cétone, la polyéthercétone-cétone et la polyétherdiphényléthercétone.

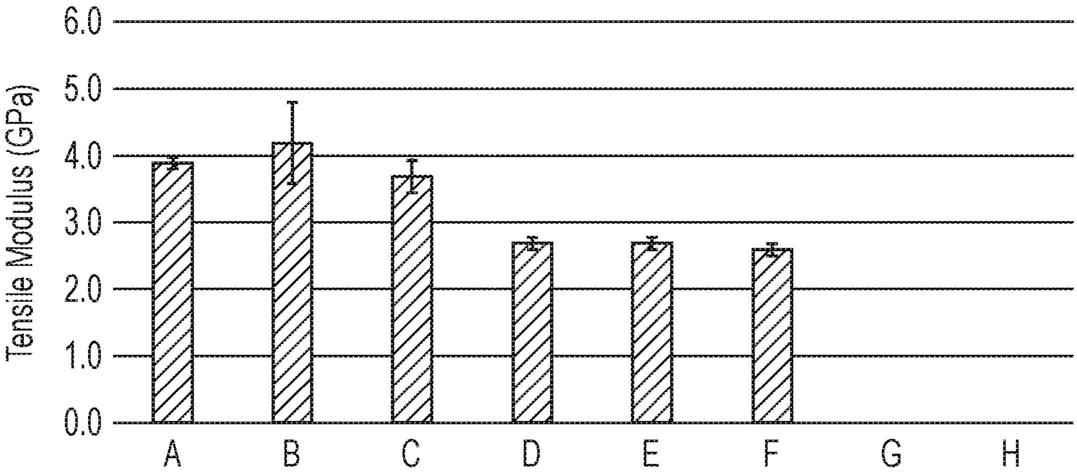


FIG. 1

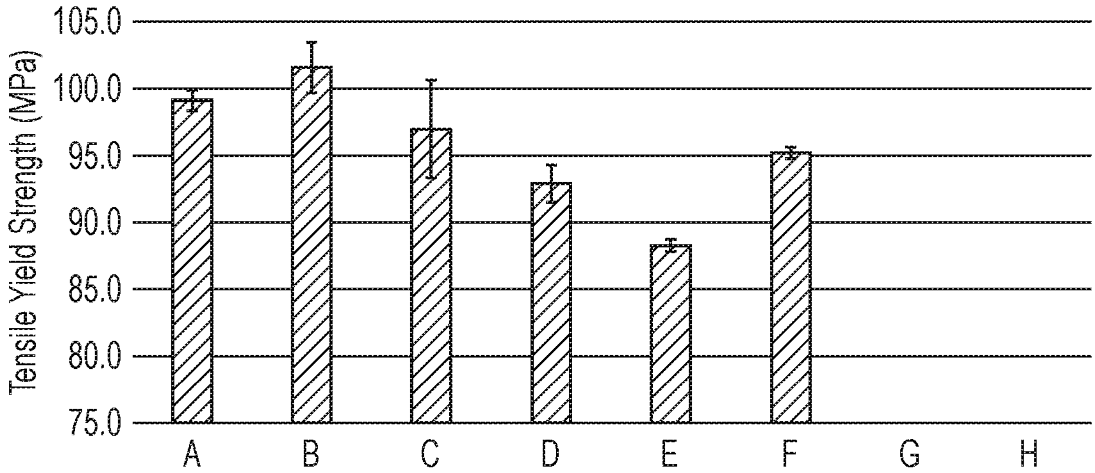
Tensile Yield Strength (MPa)
105.0
100.0
95.0
90.0
85.0
80.0
75.0
A
B
C
D
E
F
G
H

FIG. 2

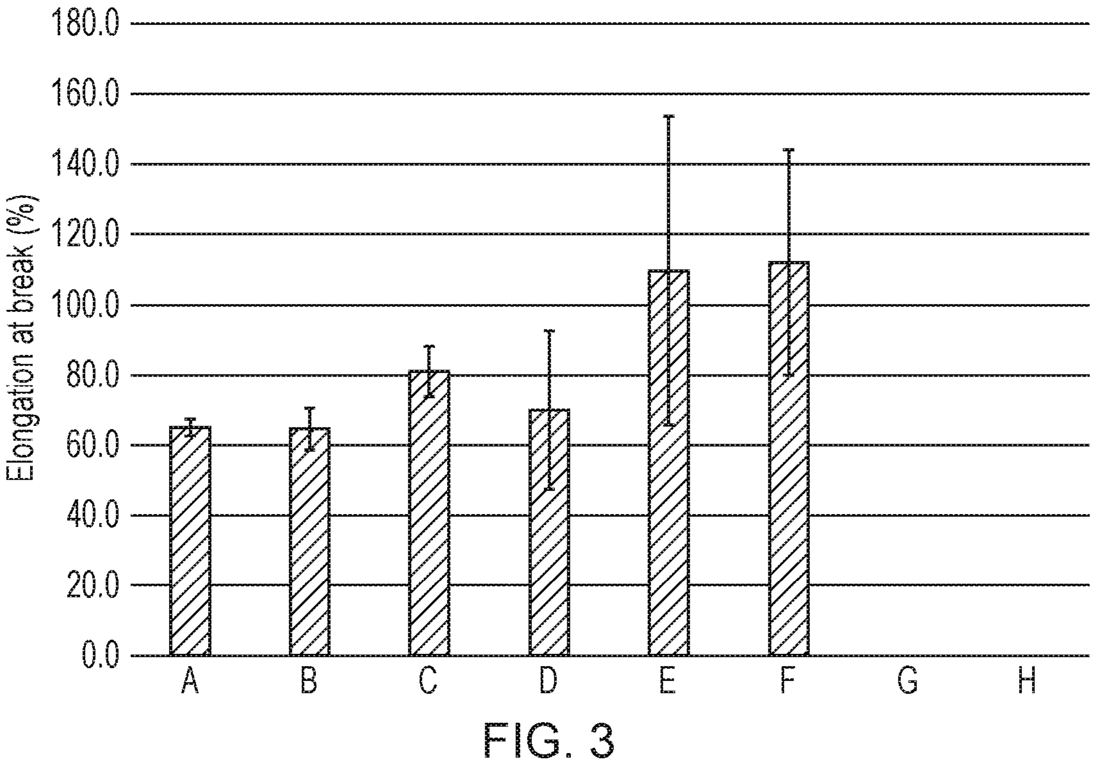
180.0
160.0
140.0
120.0
100.0
80.0
60.0
40.0
20.0
0.0
Elongation at break (%)
A
B
C
D
E
F
G
H

FIG. 3

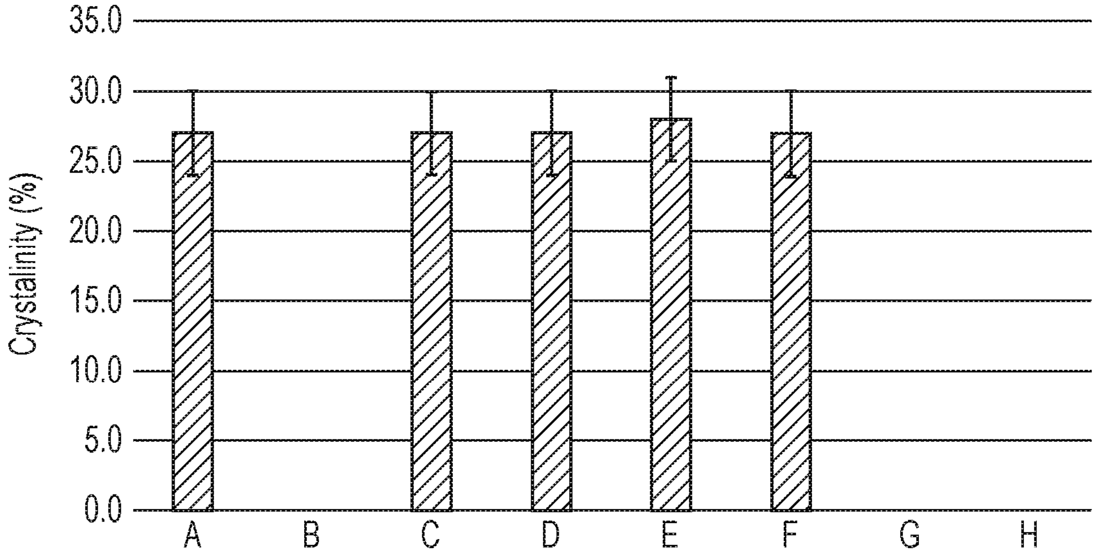


FIG. 4

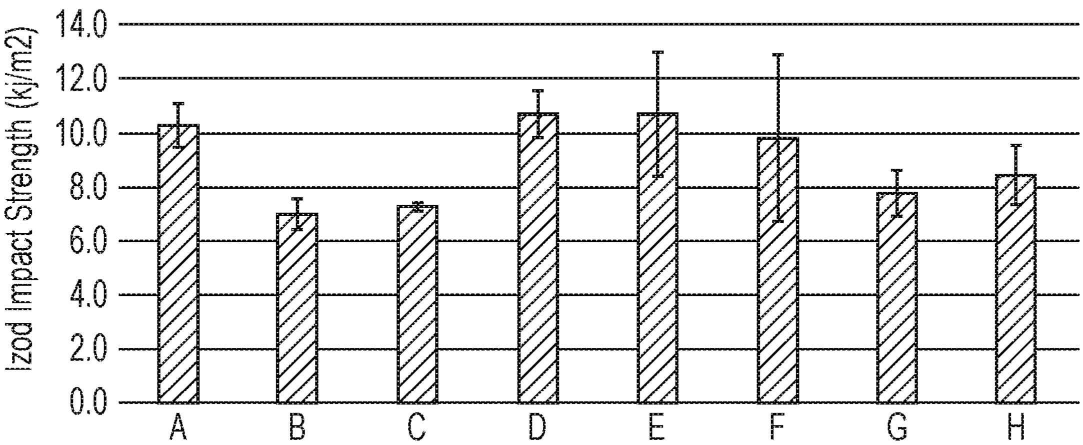


FIG. 5

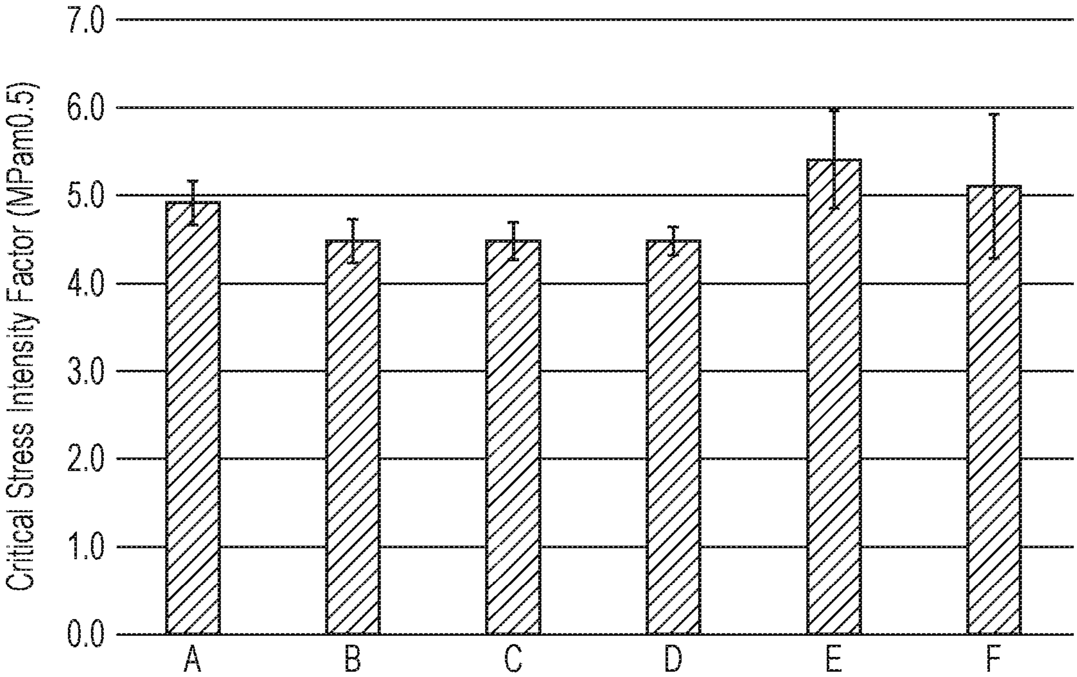
7.0
6.0
5.0
4.0
3.0
2.0
1.0
0.0
Critical Stress Intensity Factor (MPam0.5)
A
B
C
D
E
F

FIG. 6

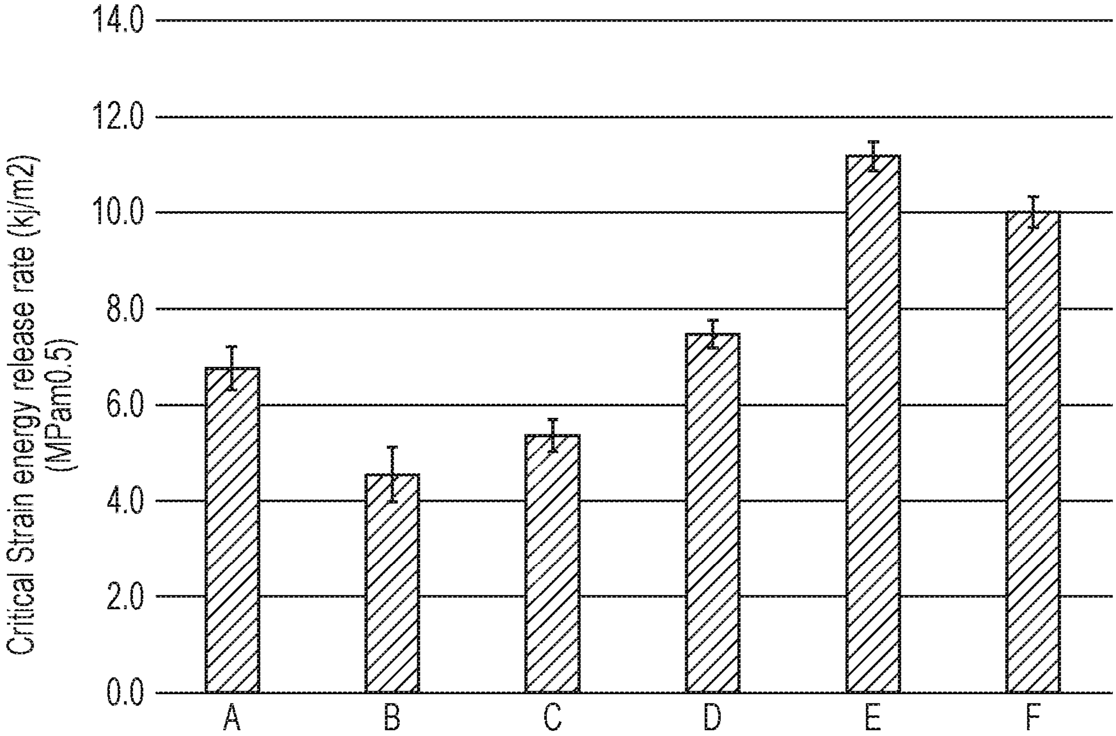
Critical Strain energy release rate (kj/m2)
(MPam0.5)
14.0
12.0
10.0
8.0
6.0
4.0
2.0
0.0
A
B
C
D
E
F

FIG. 7

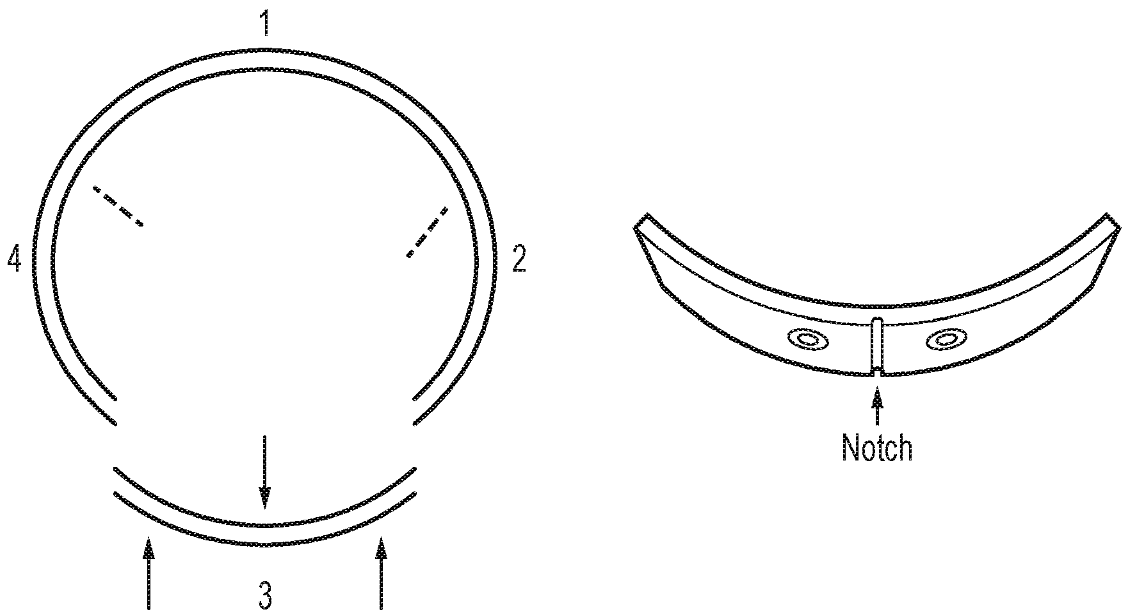


FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011117607 A1
- WO 2010088639 A1
- EP 2328951 A1
- EP 2957586 A1
- EP 3174937 A1


### Non-patent literature cited in the description


- **D.P. ROOKE** ; **D.J. CARTWRIGHT**. Stress Intensity Factors. Hillingdon Press, 1976, 86